Europäisches Patentamt

(19) European Patent Office

Office européen des brevets

(11) Veröffentlichungsnummer: **0 146 003**
**B1**

(12) **EUROPÄISCHE PATENTSCHRIFT**

(45) Veröffentlichungstag der Patentschrift:
24.05.89

(51) Int. Cl.⁴: **G 11 B 5/127**, G 11 B 5/31

(21) Anmeldenummer: **84114143.5**

(22) Anmeldetag: **22.11.84**

(54) Magnetkopf mit Haupt- und Hilfspol für ein senkrecht zu magnetisierendes Aufzeichnungsmedium.

(30) Priorität: 05.12.83 DE 3343933

(43) Veröffentlichungstag der Anmeldung:
26.06.85 Patentblatt 85/26

(45) Bekanntmachung des Hinweises auf die Patenterteilung:
24.05.89 Patentblatt 89/21

(84) Benannte Vertragsstaaten:
DE FR GB IT

(56) Entgegenhaltungen:
EP-A- 0 071 489
DE-A- 3 231 286
FR-A- 2 428 886
NL-A- 8 105 878
PATENTS ABSTRACTS OF JAPAN, Band 8, no. 79
(P-267)(1516) 11. April 1984 & JP-A-58 222 416
PATENTS ABSTRACTS OF JAPAN, Band 7, no. 176
(P-214)(1321), 4. August 1983 & JP-A-58 80 118
PATENTS ABSTRACTS OF JAPAN, Band 7, no. 202
(P-221)(1347), 7. September 1983 & JP-A-58 98 805
PATENTS ABSTRACTS OF JAPAN, Band 6, no. 62,
(P-111)(940), 21. April 1982 & JP-A-57 3210
IBM TECHNICAL DISCLOSURE BULLETIN, Band 3, no.
11, April 1961, p. 18, ARMONK, N.Y. (US), J. FLORA et
al.: "Multitrack probe type recording transducer"

(73) Patentinhaber: Siemens Aktiengesellschaft Berlin und
München, Wittelsbacherplatz 2, D-8000 München 2 (DE)

(72) Erfinder: Schewe, Herbert, Dr., Haydnstrasse 58,
D-8522 Herzogenaurach (DE)
Erfinder: Diepers, Heinrich, Dr., Veit-Stoss-Strasse 44,
D-8552 Höchstadt (DE)
Erfinder: Bartsch, Wolfgang, Rennesstrasse 21,
D-8520 Erlangen (DE)

(56) Entgegenhaltungen: (Fortsetzung)
PATENTS ABSTRACTS OF JAPAN, Band 5, no. 9,
(P-45)(681), 21. Januar 1981 & JP-A-55 139 624
PATENTS ABSTRACTS OF JAPAN, Band 6, no. 206,
(P-149)(1084), 19. Oktober 1982 JP-A-57 111 816

**Beschreibung**

Die Erfindung bezieht sich auf einen Magnetkopf für ein Aufzeichnungsmedium, das mit mindestens einer magnetisierbaren Speicherschicht versehen ist, welche ein magnetisch anisotropes Material enthält, dessen Achse leichter Magnetisierung im wesentlichen senkrecht zur Oberfläche des Mediums ausgerichtet ist und in das längs eine Spur vorbestimmter Breite Informationen in aufeinanderfolgenden Abschnitten vorbestimmter Ausdehnung durch senkrechte Magnetisierung der Speicherschicht einzuschreiben sind, welcher Magnetkopf mit einem den magnetischen Fluß führenden Leitkörper versehen ist, der auf einem Substratkörper aufgebracht ist und zwei dem Aufzeichnungsmedium zugewandte Pole aufweist, die einen Haupt- und Nebenpol darstellen und mit vorbestimmtem Abstand zueinander angeordnet sind, entgegengesetzte Polaritäten aufweisen und denen mindestens eine Spulenwicklung zugeordnet ist, wobei der die beiden Pole aufweisende Leitkörper und die Spulenwicklung als Dünnschichtstrukturen auf einer Flachseite des Substratkörpers aufgebracht sind, die bezüglich des Aufzeichnungsmediums so anzuordnen sind, daß ihre Normale zumindest annähernd parallel zur Längsrichtung der Spur ausgerichtet ist. Ein solcher Magnetkopf geht aus der NL-A-81 05 878 hervor.

Das Prinzip der senkrechten Magnetisierung zur Speicherung von Informationen ist allgemein bekannt (vgl. z.B. «IEEE Transactions on Magnetics», vol. MAG-16, no. 1, Jan. 1980, Seiten 71 bis 76 oder die DE-A-29 24 013). Für dieses Prinzip, das vielfach auch als vertikale Magnetisierung bezeichnet wird, sind besondere Aufzeichnungsmedien in Form von starren Magnetspeicherplatten, flexiblen Einzelplatten (Floppy Discs) oder Magnetbändern erforderlich. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung, enthält, dessen Achse leichter Magnetisierung senkrecht zur Oberfläche des Mediums gerichtet ist. Mittels eines besonderen Schreibkopfes werden dann längs einer Spur die einzelnen Informationen in aufeinanderfolgenden Abschnitten, auch Zellen oder Blöcke genannt, durch Magnetisierung der Speicherschicht eingeschrieben. In der Praxis werden im allgemeinen die magnetischen Flußwechsel, d.h. die Übergänge von einer Magnetisierungsrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich zu der bei dem Verfahren der longitudinalen Speicherung durch die Entmagnetisierung gegebenen Grenze wesentlich kleiner sein, so daß sich nach dem Prinzip der senkrechten Magnetisierung die Informationsdichte in dem Aufzeichnungsmedium vorteilhaft vergrößern läßt.

Bei diesem Prinzip der senkrechten Magnetisierung ergeben sich jedoch Probleme bei der Entwicklung entsprechender Magnetköpfe. Bei diesen Köpfen macht nämlich vor allem die angestrebte Flußführung zu einem möglichst geschlossenen Kreis mit geringem magnetischen Widerstand Schwierigkeiten.

Ein geeigneter Magnetkopf weist im allgemeinen einen sogenannten Hauptpol auf, mit dem ein hinreichend starkes senkrechtes Magnetfeld zum Ummagnetisieren der einzelnen Abschnitte in der Speicherschicht erzeugt wird. Der notwendige Rückschluß kann dann z.B. durch einen sogenannten Hilfspol auf der gegenüberliegenden Seite des Aufzeichnungsmediums erfolgen (vgl. die genannte Literaturstelle «IEEE Trans. Magn.», vol. MAG-16). Daneben ist auch der Rückschluß durch den Streufluß bekannt («IEEE Trans. Magn.», vol. MAG-18, no. 6, Nov. 1982, Seiten 1170 bis 1172).

Ferner läßt sich ein Rückschluß auch mit einem besonderen Hilfspol vornehmen, der sich auf derselben Seite wie der Hauptpol befindet (vgl. «IEEE Trans. Magn.», vol. MAG-17, no. 6, Nov. 1981, Seiten 3120 bis 3122 oder vol. MAG-18, no. 6, Nov. 1982, Seiten 1158 bis 1163 oder die genannte DE-A-29 14 013). Dementsprechend enthält der aus der DE-A 29 24 013 bekannte Magnetkopf in Bewegungsrichtung des unter ihm hinwegbewegten Aufzeichnungsmediums gesehen auf seiner vorderen Stirnseite einen Hilfspol und auf seiner rückwärtigen Seite den eigentlichen Hauptpol. Die beiden Pole sind auf der Oberfläche eines nichtmagnetischen Substratkörpers angeordnet, wobei die Normale auf dieser Fläche parallel zur Bewegungsrichtung liegt. Der Hauptpol besteht im wesentlichen aus einem dünnen, senkrecht zur Bewegungsrichtung verlaufenden Polstück, während der in Bewegungsrichtung gesehen vor dem Hauptpol liegende Hilfspol aus mehreren senkrecht zur Bewegungsrichtung angeordneten dünnen Polstücken mit dazwischenliegenden Isolationsschichten zusammengesetzt ist. Dieser somit eine vergleichsweise wesentlich größere Fläche der Spur überdeckende Hilfspol ist von dem Hauptpol über einen Luftspalt von einigen μm Breite getrennt. In diesem Luftspalt liegt eine elektrische Wicklung, mit der für die Schreibfunktion der Hauptpol erregt bzw. für die Lesefunktion die Erregung des Hauptpols registriert werden kann. Der Hilfspol dient dabei in jedem Fall lediglich nur zur Flußrückführung. Ein eventuelles Mitschreiben des Hilfspols kann in Kauf genommen werden, da ihm der schreibende Hauptpol stets nacheilt und somit vom Hilfspol eventuell geschriebene Informationen überschreibt, sofern die Breite des Hilfspols nicht größer als die des Hauptpols ist und somit bereits beschriebene Nachbarspuren unbeeinflußt bleiben. Bei diesem Magnetkopf sind außerdem der im Vergleich zum Hauptpol größere Querschnitt des Hilfspols und eine verhältnismäßig große Breite des Luftspaltes erforderlich, um so eine weitgehende Reduzierung der magnetischen Flußdichte am Hilfspol zu gewährleisten. Dennoch läßt sich bei dem bekannten Magnetkopf sein Luftspalt nicht so breit ausbilden, daß ein Mitlesen des Hilfspols mit seiner ablaufenden Kante völlig zu unterbinden ist. Hieraus können sich Schwierigkeiten bei der Informationserkennung ergeben.

Der bei dem bekannten Magnetkopf von der elektrischen Wicklung nicht ausgefüllte, dem Aufzeichnungsmedium zugewandte Restraum des Luftspaltes muß mit einer sogenannten isolierenden Spaltschicht gefüllt sein. Diese Spaltschicht sollte aus möglichst hartem Material wie z.B. $Al_2O_3$ bestehen, um Einkerbungen oder Auswaschungen während der Kopfherstellung zu vermeiden. Derartige Unebenheiten können nämlich zum Absturz des über dem Aufzeichnungsmedium mit äußerst geringem Abstand geführten Magnetkopfes durch sich einlagernde Schmutzpartikel führen. Es hat sich aber gezeigt, daß für den bekannten Magnetkopf die Herstellung dieser zwischen dem Haupt- und dem Hilfspol liegenden Spaltschicht außerordentlich schwierig ist.

Entsprechende Schwierigkeiten treten bei dem aus der eingangs genannten NL-A zu entnehmenden Magnetkopf nicht auf. Bei diesem Kopf ist nämlich die die beiden Pole tragende Oberfläche des Substratkörpers um 90° gedreht ausgerichtet; d.h., die beiden Pole liegen bezüglich der Bewegungsrichtung des Kopfes nebeneinander. Dann lassen sich die beiden Pole und die Spulenwicklung in Dünnschichttechnik verhältnismäßig einfach aufbringen. Hierbei können die beiden Pole verhältnismäßig weit voneinander beabstandet angeordnet werden. Gegebenenfalls kann man sogar auf die Ausbildung besonderer Spaltschichten zwischen diesen Polen ganz verzichten.

Der aus der NL-A bekannte Magnetkopf weist jedoch einen den magnetischen Fluß führenden Leitkörper auf, der eine Magnetschicht enthält, die sowohl dem Hauptpol als auch dem Nebenpol gemeinsam ist. Deshalb muß in dem gesamten Leitkörper die leichte Magnetisierung immer in die gleiche Richtung weisen. Dies hat eine wesentliche Behinderung des insbesondere für eine Schreibfunktion von einer den Hauptpol umgebenden Spulenwicklung zu erzeugenden Magnetflusses in einem Verbindungsbereich zwischen den beiden Polen des Kopfes zur Folge.

Entsprechende Probleme hinsichtlich der Magnetflußführung treten auch bei einem aus der JP-A-5 880 118 bekannten Magnetkopf auf, dessen Spulenwicklung ebenfalls um seinen Hauptpol gewickelt ist. Bei diesem Kopf liegt außerdem sein Nebenpol hinter dem Hauptpol.

Aufgabe der Erfindung ist es nun, den Magnetkopf der eingangs genannten Art dahingehend auszugestalten, daß die erwähnten Probleme hinsichtlich der Führung des Magnetflusses verringert sind und so der Wirkungsgrad des Kopfes sowohl beim Schreiben als auch beim Lesen entsprechend erhöht wird.

Diese Aufgabe wird erfindungsgemäß dadurch gelöst, daß der Leitkörper einen zwischen zwei die Pole bildenden Polstücken verlaufenden, nur magnetisch an diese Polstücke angekoppelten Verbindungsschenkel aufweist, daß die Polstücke und dieser Verbindungsschenkel aus einem Material bestehen, dessen leichte Magnetisierung jeweils zumindest weitgehend senkrecht zur Führungsrichtung des Magnetflusses in diesen Teilen gerichtet ist, und daß die Windungen der Spulenwicklung sowohl das den Hauptpol bildende Polstück als auch den Verbindungsschenkel queren.

Diese Maßnahmen führen nicht nur zu einer verbesserten Flußführung; sondern es ergibt sich auch eine Vereinfachung bei der Herstellung der Spulenwicklung in Dünnschicht-Technik. Während nämlich bei der bekannten Ausführungsform gemäß der eingangs genannten NL-A die Spulenwicklung praktisch nur den Bereich des den Hauptpol bildenden Polstückes erfassen darf, steht demgegenüber beim Anmeldungsgegenstand vorteilhaft auch der Bereich des Verbindungsschenkels bzw. des zwischen den Polen ausgebildeten Zwischenraumes zur Verfügung.

Vorteilhafte Ausgestaltungen des Magnetkopfes nach der Erfindung gehen aus den Unteransprüchen hervor.

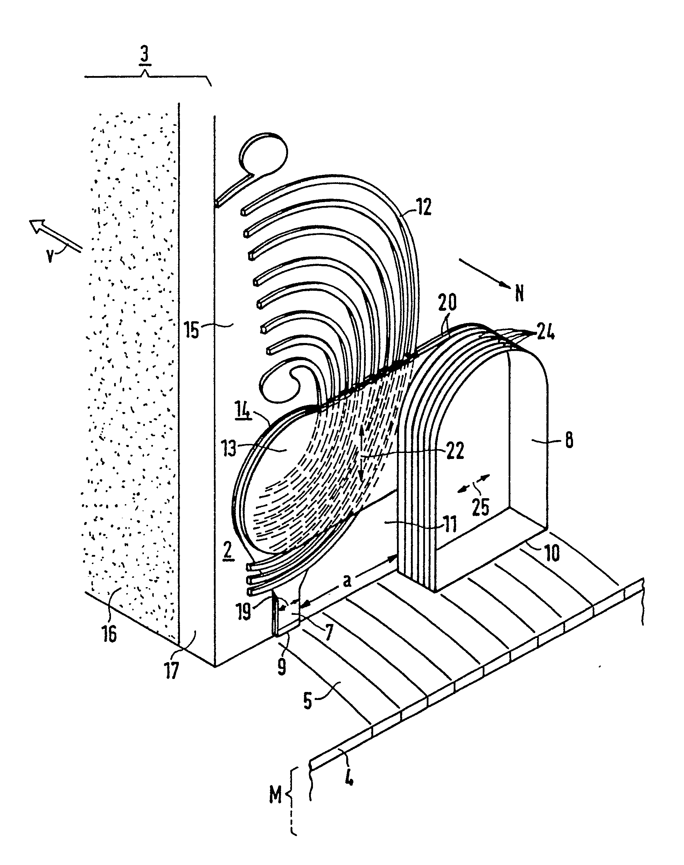

Zur weiteren Erläuterung der Erfindung wird auf die Zeichnung Bezug genommen, in deren Figur ein erfindungsgemäßer Magnetkopf schematisch veranschaulicht ist.

Mit dem in der Figur als Schrägansicht gezeigten Magnetkopf nach der Erfindung soll sowohl eine Schreib- als auch eine Lese-Funktion gemäß dem Prinzip der senkrechten (vertikalen) Magnetisierung auszuüben sein. Der allgemein mit 2 bezeichnete Kopf befindet sich an einer Flachseite eines als Flugkörper bezeichneten Elementes 3, das in der Figur nur teilweise ausgeführt ist. Er ist relativ zu einem an sich bekannten, vertikal zu magnetisierenden Aufzeichnungsmediums M in geringer Flughöhe von beispielsweise 0,2 μm über dessen Speicherschicht 4 längs einer Spur 5 zu führen. Zum Beispiel wird das Aufzeichnungsmedium unter dem Magnetkopf hinweggeführt. Die relative Bewegungsrichtung des Magnetkopfes 2 bezüglich des Aufzeichnungsmediums M ist durch eine mit v bezeichnete gepfeilte Linie angedeutet.

Der Magnetkopf 2 weist zwei einen Hauptpol 7 und einen Hilfspol 8 bildende Polstücke auf, die in Bewegungsrichtung v gesehen nebeneinander angeordnet und an ihren dem Aufzeichnungsmedium zugewandten Enden 9 bzw. 10 zumindest weitgehend senkrecht zur Oberfläche des Aufzeichnungsmediums M ausgerichtet sind. Zwischen diesen Polstückenden ist ein Luftspalt 11 ausgebildet, der im Bereich der Polenden 9 und 10 eine vorbestimmte Ausdehnung a hat. Durch diesen Spalt erstrecken sich die in der Figur nur angedeuteten Windungen einer den Hauptpol 7 umschließenden Spulenwicklung 12. Auf der dem Aufzeichnungsmedium M abgewandten Seite des Kopfes 2 sind die beiden Polstücke 7 und 8 über einen Verbindungsschenkel 13 miteinander verbunden. Somit bilden bei dem Magnetkopf 2 die beiden Pole 7 und 8 sowie der Verbindungsschenkel 13 einen den magnetischen Fluß führenden Leitkörper 14.

Ferner ist die den Magnetkopf 2 tragende Flachseite 15 des Flugkörpers 3 so ausgerichtet und wird so geführt, daß die auf ihr stehende Normale N parallel zu Bewegungsrichtung v bzw. zur Längsrichtung der Spur in einer parallelen Ebene zur Oberfläche des Aufzeichnungsmediums M liegt. Der Magnetkopf 2 läßt sich dann in Dünnschicht- bzw. Dünnfilm-Technik verhältnismäßig einfach aufbauen.

Hierzu wird im allgemeinen ein Flugkörper 3 mit einem Substrat 16 verwendet, das z.B. aus TiC und $Al_2O_3$ besteht. Falls erforderlich, kann der Substratkörper 16 noch mit einer hinreichend, beispielsweise 15 μm dicken Isolationsschicht 17 aus z.B. $Al_2O_3$ versehen werden. Zum Aufbau der Polstücke 7 und 8 mit einer Dicke zwischen etwa 0,2 bis 2 μm bzw. 1 und 20 μm sowie des verhältnismäßig dünnen Verbindungsschenkels 13 werden dünne Magnetschichten aus speziellen NiFe-Legierungen wie Permalloy (Ni/Fe-81/19) oder aus FeB durch Sputtern, Aufdampfen oder galvanische Abscheidung aufgebracht. Diese Magnetschichten werden jeweils durch eine dünne, z.B. 0,2 μm starke nicht-magnetische Zwischenlage z.B. aus $SiO_2$ oder $Al_2O_3$ voneinander getrennt. Die Magnetisierung der Magnetschichten liegt dabei in der Schichtebene. Durch den Herstellungsprozeß bedingt weisen die Magnetschichten eine uniaxiale Anisotropie auf, d.h. daß jede Magnetschicht zwei um 90° gedrehte Anisotropieachsen hat, die als leichte bzw. schwere Richtung bezeichnet wrden. Die Magnetisierung liegt bevorzugt parallel oder antiparallel zur leichten Richtung. Die leichte Richtung der Magnetschichten kann z.B. beim Aufbringen der jeweiligen Schicht durch ein angelegtes Magnetfeld induziert werden. Gemäß der Erfindung soll sie in den einzelnen Teilen des Leitkörpers zumindest weitgehend senkrecht zur Führung des Magnetflusses gerichtet sein:

Die zunächst aufgewachsenen, unterschiedlichen Schichten für den Hauptpol 7, die in der Figur mit 18 bezeichnet sind, werden durch an sich bekannte Techniken wie Fotolithografie, Plasma-, Ionenstrahl- oder naßchemisches Ätzen so strukturiert, daß sich der als Hauptpol dienende erste Pol 7 des Magnetkopfes 2 ergibt. Das Ende 9 dieses Poles kann dann eine Ausdehnung von z.B. etwa 0,3 μm in Bewegungsrichtung v und von 10 μm quer dazu aufweisen. Die durch eine gepfeilte Linie 19 angedeutete leichte Richtung der Magnetisierung der Magnetschichten 18 liegt hierbei zumindest im Bereich des Polendes 9 im wesentlichen parallel zur Oberfläche des Aufzeichnungsmediums M.

Nach Fertigstellung dieses ersten Poles 7 wird eine in der Figur nicht ausgeführte Isolationsschicht, z.B. aus $SiO_2$ oder $Al_2O_3$, aufgebracht, bevor die Windungen der zum Ein- und Auslesen der Daten in der Magnetspeicherschicht 4 des Aufzeichnungsmediums erforderlichen Spulenwicklung 12 in Dünnschichttechnik hergestellt und anschließend strukturiert werden. Die Windungen dieser Wicklung bestehen z.B. aus Cu, Au oder Al. Da unebene Magnetschichten eine Verschlechterung ihrer magnetischen Eigenschaften bewirken können, läßt sich gegebenenfalls die

Spulenwicklung 12 in bekannter Weise noch mittels eines Kunststoff-Lackes, vorzugsweise auf der Basis von Polyimid, einebnen.

Anschließend wird der im wesentlichen parallel zur Oberfläche des Aufzeichnungsmediums M liegende Verbindungsschenkel 13 ausgebildet, indem seine lamellierten Magnetschichten 20 auf die bereits mit dem Hauptpol 7 und der Spulenwicklung 12 versehene Isolationsschicht 17 des Substratkörpers 16 aufgebracht werden. Die durch eine gepfeilte Linie 22 angedeutete leichte Richtung der Magnetisierung dieser Schichten soll dabei zumindest annähernd senkrecht zur Oberfläche des Aufzeichnungsmediums orientiert sein.

Daran anschließend erfolgt das Aufbringen und Strukturieren des gegenüber dem Hauptpol wesentlich dickeren, als Hilfspol dienenden zweiten Polstückes 8 in der vorbestimmten Entfernung a von beispielsweise 10 bis 100 μm von dem Hauptpol 7. Die dem Aufzeichnungsmedium zugewandte Fläche seines Endes 10 ist somit wesentlich größer, vorzugsweise mindestens 10 mal größer als die entsprechende Fläche des Hauptpoles 7. Zum Beispiel ist dieser Hilfspol in Bewegungsrichtung v gesehen etwa 10 μm lang und quer dazu etwa 50 μm breit. Seine in entsprechender Anzahl vorzusehenden Schichten aus der speziellen NiFe-Legierung weisen dabei eine leichte Richtung ihrer Magnetisierung auf, die durch eine gepfeilte Linie 25 angedeutet ist und parallel zur Oberfläche des Aufzeichnungsmediums wie beim Hauptpol 7 liegt.

Zuletzt wird zum Schutz des so hergestellten Dünnschicht-Magnetkopfes 2 noch eine verhältnismäßig dicke Protektionsschicht z.B. aus $Al_2O_3$ aufgebracht. Mit dieser Schicht läßt sich zum einen vorteilhaft die Welligkeit der Oberfläche des Magnetkopfes 2 glätten. Zum anderen können aber auch mit einer solchen Schicht aus diesem verhältnismäßig harten Material Auswaschungen insbesondere im Bereich des Spaltes 11 verhindert werden, die zum Absturz des über dem Aufzeichnungsmedium M in äußerst geringer Höhe hinwegfliegenden Magnetkopfes 2 durch sich einlagernde Schmutzpartikel führen können. Ferner ist diese Protektionsschicht erforderlich, um während der Vereinzelung auftretende mechanische Belastungen der Dünnfilm-Strukturen abzufangen.

Mit der vorbestimmten Ausrichtung der Oberfläche der auf dem Substratkörper 16 aufgebrachten Isolationsschicht 17 bezüglich der Bewegungsrichtung v können bei dem Magnetkopf nach der Erfindung ohne weiteres der Abstand a zwischen dem Hauptpol 7 und dem Hilfspol 8 sowie der Querschnitt dieses Hilfspols ausreichend groß gewählt werden, so daß ein Mitlesen der ablaufenden Kante des Hilfspols praktisch nicht auftritt. Der Magnetkopf 2 schreibt somit vorteilhaft im wesentlichen nur mit seinem Hauptpol quasi als sogenannter Einzel-Pol-Kopf die Informationen in das Aufzeichnungsmedium (vgl. z.B. «IEEE Trans. Magn.», vol. MAG-16, no. 5, Sept. 1980, Seiten 967 bis 972). Außerdem treten auch die sonst bei sehr kleinem Abstand zwischen den beiden Polen auftretenden Probleme einer Ausfüllung des Zwischenraumes mit einem verhältnismäßig harten Material kaum auf.

**Patentansprüche**

1. Magnetkopf (2) für ein Aufzeichnungsmedium (M), das mit mindestens einer magnetisierbaren Speicherschicht (4) versehen ist, welche ein magnetisch anisotropes Material enthält, dessen Achse leichter Magnetisierung im wesentlichen senkrecht zur Oberfläche des Mediums ausgerichtet ist und in das längs einer Spur (5) vorbestimmter Breite Informationen in aufeinanderfolgenden Abschnitten vorbestimmter Ausdehnung durch senkrechte Magnetisierung der Speicherschicht (4) einzuschreiben sind, welcher Magnetkopf (2) mit einem den magnetischen Fluß führenden Leitkörper (14) versehen ist, der auf einem Substratkörper (16, 17) aufgebracht ist und zwei dem Aufzeichnungsmedium zugewandte Pole (7, 8) aufweist, die einen Haupt- und Nebenpol darstellen und mit vorbestimmtem Abstand (a) zueinander angeordnet sind, entgegengesetzte Polaritäten aufweisen und denen mindestens eine Spulenwicklung (12) zugeordnet ist, wobei der die beiden Pole (7, 8) aufweisende Leitkörper (14) und die Spulenwicklung (12) als Dünnschichtstrukturen auf einer Flachseite (15) des Substratkörpers (16, 17) aufgebracht sind, die bezüglich des Aufzeichnungsmediums (M) so anzuordnen ist, daß ihre Normale (N) zumindest annähernd parallel zur Längsrichtung (v) der Spur (5) ausgerichtet ist, dadurch gekennzeichnet, daß der Leitkörper (14) einen zwischen zwei die Pole (7, 8) bildenden Polstücken verlaufenden, nur magnetisch an diese Polstücke angekoppelten Verbindungsschenkel (13) aufweist, daß die Polstücke und dieser Verbindungsschenkel (13) aus einem Material bestehen, dessen leichte Magnetisierung (19, 22, 25) jeweils zumindest weitgehend senkrecht zur Führungsrichtung des Magnetflusses in diesen Teilen (7, 8, 13) gerichtet ist, und daß die Windungen der Spulenwicklung (12) sowohl das den Hauptpol (9) bildende Polstück als auch den Verbindungsschenkel (13) queren.

2. Magnetkopf nach Anspruch 1, dadurch gekennzeichnet, daß die dem Aufzeichnungsmedium (M) zugewandte Fläche des Endes (10) des Hilfspols (8) mindestens 10 mal größer als die entsprechende Fläche des Hauptpolendes (9) ist.

3. Magnetkopf nach Anspruch 1 oder 2, dadurch gekennzeichnet, daß die Teile des Leitkörpers (14) zumindest teilweise aus weichmagnetischem Material besteht.

4. Magnetkopf nach einem der Ansprüche 1 bis 3, dadurch gekennzeichnet, daß die Teile des Leitkörpers (14) aus einzelnen Schichten (18, 20, 24) bestehen, die durch nicht-magnetische Zwischenlagen voneinander getrennt sind.

5. Magnetkopf nach einem der Ansprüche 1 bis 4, dadurch gekennzeichnet, daß der Substratkörper (16) aus TiC und $Al_2O_3$ besteht.

6. Magnetkopf nach Anspruch 5, dadurch gekennzeichnet, daß der Substratkörper (16) mit einer Isolationsschicht (17) versehen ist.

7. Magnetkopf nach Anspruch 6, dadurch gekennzeichnet, daß die Isolationsschicht (17) aus $Al_2O_3$ besteht.

8. Magnetkopf nach einem der Ansprüche 1 bis 7, dadurch gekennzeichnet, daß die Spulenwicklung (12) mittels eines isolierenden Materials, vorzugsweise mittels eines Lackes, eingeebnet ist.

9. Magnetkopf nach einem der Ansprüche 1 bis 8, dadurch gekennzeichnet, daß der auf dem Substratkörper (16, 17) aufgebrachte Leitkörper (14) und die Spulenwicklung (12) mit einer gemeinsamen Schutzschicht abgedeckt sind.

10. Magnetkopf nach Anspruch 9, dadurch gekennzeichnet, daß die Schutzschicht aus $Al_2O_3$ besteht.

**Claims**

1. Magnetic head (2) for a recording medium (M) which is provided with at least one magnetisable storage layer (4) which contains a magnetically anisotropic material whose axis of easy magnetisation is directed substantially perpendicular to the surface of the medium and into which information is to be written along a track (5) of predetermined width in consecutive sections of predetermined extent by vertical magnetisation of the storage layer (4), which magnetic head (2) is provided with a conductor body (14), conveying the magnetic flux, which is deposited on a substrate body (16, 17) and has two poles (7, 8) facing the recording medium which represent a main and auxiliary pole and are arranged with a predetermined spacing (a) between each other, have opposite polarities, and with which at least one coil winding (12) is associated, the conductor body (14) having the two poles (7, 8) and the coil winding (12) being provided as thin layer structures on a flat side (15) of the substrate body (16, 17), which is to be arranged with respect to the recording medium (M) so that its normal (N) is directed at least approximately parallel to the longitudinal direction (v) of the track (5), characterised in that the conductor body (14) has a connecting limb (13) extending between two pole pieces forming the poles (7, 8), and only magnetically coupled to these pole pieces, in that the pole pieces and this connecting limb (13) are of a material whose direction of easy magnetisation (19, 22, 25) is in each case at least substantially perpendicular to the guide direction of the magnetic flux in these parts (7, 8, 13) and in that the windings of the coil winding (12) cross both the pole piece forming the main pole (9) and also the connecting limb (13).

2. Magnetic head according to claim 1, characterised in that the surface of the end (10) of the auxiliary pole (8) facing the recording medium (M) is at least 10 times larger than the corresponding surface of the main pole end (9).

3. Magnetic head according to claim 1 or 2, characterised in that the parts of the conductor body (14) are at least partially made of soft magnetic material.

4. Magnetic head according to one of claims 1 to 3, characterised in that the parts of the conductor body (14) are of individual layers (18, 20, 24) separated from each other by non-magnetic intermediate layers.

5. Magnetic head according to one of claims 1 to 4, characterised in that the substrate body (16) is of TiC and $Al_2O_3$.

6. Magnetic head according to claim 5, characterised in that the substrate body (16) is provided with an insulation layer (17).

7. Magnetic head according to claim 6, characterised in that the insulation layer (17) is of $Al_2O_3$.

8. Magnetic head according to one of claims 1 to 7, characterised in that the coil winding (12) is levelled off by means of an insulating material, preferably by means of a lacquer.

9. Magnetic head according to one of claims 1 to 8, characterised in that the conductor body (14) deposited on the substrate body (16, 17), and the coil winding (12) are covered by a common protective layer.

10. Magnetic head according to claim 9, characterised in that the protective layer is of $Al_2O_3$.

**Revendications**

1. Tête magnétique (2) pour un support d'enregistrement (M) qui comporte au moins une couche de mémoire (4) aimantable contenant un matériau anisotrope du point de vue magnétique, dont l'axe d'aimantation facile est sensiblement perpendiculaire à la surface du support d'enregistrement et dans lequel des informations doivent être enregistrées le long d'une piste (5) possédant une largeur prédéterminée, dans des sections successives possédant une étendue prédéterminée, au moyen d'une aimantation perpendiculaire de la couche de mémoire (4), la tête magnétique (2) étant pourvue d'un corps de guidage (14) qui guide le flux magnétique, et qui est disposé sur un corps formant substrat (16, 17) et comporte deux pôles (7, 8), qui sont tournés vers le support d'enregistrement et représentent un pôle principal et un pôle auxiliaire et sont disposés à une distance réciproque (a) prédéterminée et possèdent des polarités opposées et auxquels est associé au moins un enroulement de bobine (12), le corps de guidage (14) comportant les deux pôles (7, 8) et l'enroulement de bobine (12) étant déposés sous la forme de structures à couches minces sur une face plane (15) du corps formant substrat (16, 17), qui doit être disposée par rapport au support d'enregistrement (M) de manière que sa normale (N) soit au moins approximativement parallèle à la direction longitudinale (v) de la piste (5), caractérisée par le fait que le corps de guidage (14) possède une branche de jonction (13), qui s'étend entre deux pièces polaires formant les pôles (7, 8) et est couplée uniquement magnétiquement à ces pièces polaires, que les pièces polaires et cette branche de jonction (13) sont réalisées en un matériau dont l'aimantation facile (19, 22, 25) est orientée respectivement, au moins dans une large mesure, perpendiculairement à la direction de guidage du flux magnétique dans ces éléments (7, 8, 13), et que les spires de l'enroulement de bobine (12) croisent aussi bien la pièce polaire formant le pôle principal (9) que la branche de jonction (13).

2. Tête magnétique selon la revendication 1, caractérisée en ce que la surface, tournée vers le support d'enregistrement (M), de l'extrémité (10) du pôle auxiliaire (8) est au moins 10 fois supérieure à la surface correspondante de l'extrémité (9) du pôle principal.

3. Tête magnétique suivant la revendication 1 ou 2, caractérisée par le fait que les parties du corps de guidage (14) sont réalisées au moins partiellement en un matériau magnétique doux.

4. Tête magnétique suivant l'une des revendications 1 à 3, caractérisée par le fait que les parties du corps de guidage (14) sont constituées par différentes couches (18, 20, 24), qui sont séparées les unes des autres par des couches intercalaires amagnétiques.

5. Tête magnétique suivant l'une des revendications 1 à 4, caractérisée par le fait que le corps formant substrat (16) est constitué par du TiC et du $Al_2O_3$.

6. Tête magnétique suivant la revendication 5, caractérisée par le fait que le corps formant substrat (16) comporte une couche isolante (17).

7. Tête magnétique suivant la revendication 6, caractérisée par le fait que la couche isolante (17) est constituée par du $Al_2O_3$.

8. Tête magnétique suivant l'une des revendications 1 à 7, caractérisée par le fait que l'enroulement de bobine (12) est aplani au moyen d'un matériau isolant, de préférence au moyen d'un vernis.

9. Tête magnétique suivant l'une des revendications 1 à 8, caractérisée par le fait que le corps de guidage (14) déposé sur le corps formant substrat (16, 17) et l'enroulement de bobine (12) sont recouverts par une couche protectrice commune.

10. Tête magnétique suivant la revendication 9, caractérisée par le fait que la couche protectrice est constituée par du $Al_2O_3$.